# EUROPEAN PATENT APPLICATION

(11) **EP 4 753 056 A1**
(43) Date of publication of application: **03.06.2026**
(21) Application number: 25218533.5
(22) Date of filing: 26.11.2025
(51) Int. Cl.: H01M 50/414, H01M 50/44, H01M 50/443, H01M 4/62, H01M 10/42, H01M 10/0525, H01M 4/02

(54) **ELECTRODE FOR RECHARGEABLE LITHIUM BATTERIES, MANUFACTURING METHOD THEREOF, AND RECHARGEABLE LITHIUM BATTERIES INCLUDING THE SAME**

(30) Priority: 28.11.2024 KR 20240174128
(71) Applicant: SAMSUNG SDI CO., LTD., Yongin-si, Gyeonggi-do 17084 (KR)
(72) Inventor: PARK, Changwon, 17084 Yongin-si, Gyeonggi-do (KR); YANG, Hosung, 17084 Yongin-si, Gyeonggi-do (KR); YOU, Duckjae, 17084 Yongin-si, Gyeonggi-do (KR); WOO, Jiye, 17084 Yongin-si, Gyeonggi-do (KR); YUK, Seoyeon, 17084 Yongin-si, Gyeonggi-do (KR); LEE, Donggeun, 17084 Yongin-si, Gyeonggi-do (KR)
(74) Representative: Michalski Hüttermann & Partner Patentanwälte mbB

(57) **Abstract**

Some example embodiments include an electrode for a rechargeable lithium battery, a manufacturing method thereof, and a rechargeable lithium battery including the electrode. The electrode includes a current collector, an electrode active material layer on the current collector, and a coating layer on the electrode active material layer. The coating layer includes nanofibers and curable polymer distributed in an island shape between the nanofibers.

## Description

### BACKGROUND

### 1. Field

The present disclosure relates to an electrode for a rechargeable lithium battery, a method for manufacturing the electrode, and a rechargeable lithium battery including the electrode.

### 2. Description of the Related Art

With increasing use of electronic devices that use batteries, such as, e.g., mobile phones, laptop computers, and electric vehicles, the demand for rechargeable batteries with high energy density and high capacity is increasing. Accordingly, improving the performance of rechargeable lithium batteries may be advantageous.

Rechargeable lithium batteries include a positive electrode and a negative electrode including an active material capable of intercalating and deintercalating lithium ions, and an electrolyte solution, and generate electrical energy through oxidation and reduction reactions when lithium ions are intercalated and deintercalated from the positive electrode and the negative electrode.

### SUMMARY

Some example embodiments include a rechargeable lithium battery having an electrode having desired or improved strength, adhesive strength, and air permeability and low resistance, and desired or improved safety by reducing or suppressing gas generation during operation, and improved electrochemical performance such as cycle-life characteristics.

Some example embodiments provide an electrode for a rechargeable lithium battery, including: a current collector; an electrode active material layer on the current collector; and a coating layer on the electrode active material layer, wherein the coating layer includes nanofibers and a curable polymer distributed in an island shape between the nanofibers.

In the context of this application, the curable polymer being distributed in an island shape between the nanofibers means that the curable polymer does not form a continuous layer. Instead, well delimited areas of curable polymer that are surrounded by the nanofiber are discernable.

Some example embodiments provide a method for manufacturing an electrode for a rechargeable lithium battery, including: preparing a fiber spinning solution; preparing a spray solution including a curable polymer; electrospinning the fiber spinning solution into nanofibers on the surface of an electrode active material layer and simultaneously or contemporaneously electrospraying the spray solution; and curing the curable polymer to form a coating layer on the surface of the electrode active material layer.

Some example embodiments provide a rechargeable lithium battery including the electrode; and an electrolyte.

The electrode according to some example embodiments has desired or improved strength, adhesion, and air permeability, and a rechargeable lithium battery including the electrode exhibits desired or improved safety because gas generation is reduced or suppressed during operation.

### BRIEF DESCRIPTION OF THE DRAWINGS

FIG. 1 is a cross-sectional view schematically illustrating an electrode assembly according to some example embodiments.
FIG. 2 is a cross-sectional view schematically illustrating a negative electrode according to some example embodiments.
FIGS. 3 to 6 are views schematically showing rechargeable lithium batteries according to some example embodiments.
FIG. 7 is a SEM image of the surface of the coating layer manufactured in Example 1.
FIG. 8 is a flowchart illustrating a method of manufacturing an electrode for a rechargeable lithium battery, according to an example embodiment.

### DETAILED DESCRIPTION

Hereinafter, example embodiments are described in detail. However, these embodiments are presented as examples, and the present disclosure is not limited thereto, and the present disclosure is defined by the scope of the claims described below.

As used herein, when specific definition is not otherwise provided, layer, it is understood that when an element such as a layer, film, region, or substrate is referred to as being "on" another element, it can be directly on the other element or intervening elements may also be present.

Unless otherwise specified in this specification, what is indicated in the singular may also include the plural. In addition, unless otherwise specified, "A or B" may mean "including A, including B, or including A and B."

As used herein, "combination thereof" means a mixture, a laminate, a composite, a copolymer, an alloy, a blend, a reaction product, and the like of the constituents.

As used herein, when a definition is not otherwise provided, the particle diameter may be an average particle diameter. In addition, the particle diameter may refer to an average particle diameter (D50), which means the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D50) value may be readily obtained through a calculation. Alternatively, it can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Electrode

The electrode for a rechargeable lithium battery according to some example embodiments includes a current collector; an electrode active material layer on the current collector; and a coating layer on the electrode active material layer.

The coating layer may be disposed on the electrode active material layer and may be integrated with the electrode active material layer.

The coating layer may constitute a separator between the positive and negative electrodes to reduce or prevent short circuits, and thus, a rechargeable lithium battery according to some example embodiments may not include a separate separator. Accordingly, because the rechargeable lithium battery according to some example embodiments does not include a separate separator, the separator can be omitted during manufacturing. In addition, because there may not be a need to perform a lamination process to combine the separator and the electrode, the battery can be manufactured economically, and the energy density may be increased while reducing the volume of the battery.

In some example embodiments, a battery may be manufactured by stacking an electrode and a counter electrode so that the active material layer of the counter electrode is in contact with the coating layer to manufacture an electrode assembly, inserting the electrode assembly into a battery case, and then injecting an electrolyte solution.

As another example, both the positive and negative electrodes may be manufactured by forming a coating layer according to some example embodiments, stacking the positive and negative electrodes so that the respective coating layers are in contact with each other to form an electrode assembly, inserting the positive and negative electrodes into a case, and then injecting an electrolyte solution to manufacture a battery.

As another example, an all-solid-state rechargeable battery may be manufactured by stacking, e.g., sequentially stacking a solid electrolyte layer and a counter electrode on the coating layer.

Meanwhile, while using an electrode according to some example embodiments, a separator may be separately interposed between the positive and negative electrodes depending on the required specifications.

In various example embodiments, the coating layer may be integrated with the electrodes to implement strong adhesive strength while implementing desired or improved air permeability and physical strength between the positive and negative electrodes, and may effectively perform a role of isolating the two electrodes even with a thin thickness, and may improve cycle-life characteristics of the battery by reducing or preventing the growth of lithium dendrites formed during charge and discharge.

In addition, the fact that the coating layer is integrated with the electrode active material layer may refer to a state in which a portion of the coating layer components permeates the electrode active material layer by directly forming the coating layer on the electrode active material layer using an electrospinning or electrospraying manner, and may refer to a region in which the electrode active material layer components and the coating layer components are mixed with each other at the interface between the electrode active material layer and the coating layer.

According to some example embodiments, the electrode may more firmly bond the electrode active material layer and the coating layer, and exhibit a higher adhesive strength compared to cases where a coating layer is formed on an electrode active material layer using a general coating method, or where the coating layer is separately manufactured in a film form and then stacked on the electrode active material layer.

Accordingly, the fact that the coating layer is integrated with the electrode active material layer may be clearly seen when a cross-section of the electrode assembly is photographed using a scanning electron microscope (SEM), and the like, and although the electrode active material layer and the coating layer are distinguishable, the interface (boundary portion) between the electrode active material layer and the coating layer may appear uneven (unflat), or a region where the components of the electrode active material layer and the components of the coating layer are mixed may appear with a certain thickness at the interface between the electrode active material layer and the coating layer.

In addition, because the electrode active material layer and the coating layer are integrated, the electrode active material layer and the coating layer are in close contact with each other, so that the interface between the electrode active material layer and the coating layer may be formed in a dense configuration without pores.

Accordingly, because the coating layer is integrated with the electrode active material layer, the coating layer may be in a more firmly bonded state with the electrode active material layer. Accordingly, the physical strength and durability of the battery are improved, and the processability may be improved, as challenges of each layer detaching or slipping substantially do not occur during the battery manufacturing process.

In addition, polymer films such as polypropylene, which are generally used as separators, may experience dimensional changes due to heat shrinkage when charging and discharging are repeated, which may result in a decrease in the positive and negative electrode separation function, which may cause challenges such as short circuits.

However, a rechargeable lithium battery including an electrode according to some example embodiments does not present a challenge such as heat shrinkage because the coating layer that constitutes a separator is integrated with the electrode active material layer.

In addition, by integrating the coating layer with the electrode active material layer, heat resistance and insulation may be improved while reducing resistance. If (when) the coating layer is not integrated with the electrode active material layer, but is formed as a separate layer and then combined with the coating layer and the electrode active material layer, there may be a disadvantage in that the lithium movement resistance increases because the coating layer and the electrode active material layer are not integrated, and an additional process for integration may be required.

The coating layer included in the electrode according to some example embodiments includes nanofibers and a curable polymer distributed in an island shape between the nanofibers.

According to some example embodiments, the coating layer may be or include a layer formed by simultaneously or contemporaneously performing electrospinning of nanofibers and electrospraying of a curable polymer.

For example, the nanofibers formed by the electrospinning method may have a three-dimensional network structure, for example, a woven structure or a non-woven structure. Accordingly, when the nanofibers have a three-dimensional network structure, for example, a woven structure or a non-woven structure, there may be an advantage of reducing or minimizing Li ion movement resistance.

The existence of nanofibers in a three-dimensional network structure may refer to a porous structure in which pores are formed. For example, an average diameter of the pores included in the nanofibers may be in a range of about 10 nm to about 200 nm, for example about 10 nm to about 150 nm, about 50 nm to about 150 nm, or about 50 nm to about 100 nm. When the above range of the average diameter of the pores is satisfied, the coating layer may exhibit desired or improved air permeability, adhesive strength, and mechanical strength.

The pore diameter refers to a diameter of an individual pore included in a nanofiber having a three-dimensional network structure, and the longest axis crossing the cross-section of the pore may be defined as the diameter.

The average diameter of the pores may mean a value obtained by measuring the cross-sectional diameters of about 20 pores in an SEM image of the surface of the coating layer, and calculating an arithmetic mean thereof.

For example, the curable polymer formed by the electrospraying method may be distributed in an island shape between the nanofibers of the three-dimensional network structure described above. Accordingly, by distributing the curable polymer in an island shape on the surface of the nanofibers having the three-dimensional network structure described above and at the joining sites between the nanofibers, the mechanical strength of the nanofibers themselves may be improved, and by improving the joining force between the nanofibers, the strength of the coating layer may also be improved.

In addition, because the curable polymer is formed like protrusions on the surface of the nanofiber, the air permeability of the coating layer may be improved, thereby improving the safety of the battery. In addition, this configuration has the advantage of improving adhesive strength between the coating layer and the electrode active material layer, thereby reducing or preventing the delamination of the coating layer and reducing or preventing gas from being generated during battery operation.

For example, the electrode according to some example embodiments may be a negative electrode, a positive electrode, or both, and in an example, the electrode may be a negative electrode. Hereinafter, the coating layer is described mainly based on the case where the electrode is a negative electrode, but the same content can be applied to the positive electrode as well.

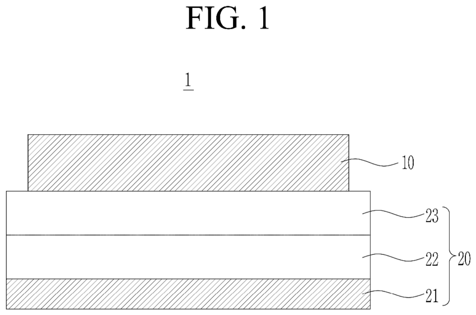

FIG. 1 is a cross-sectional view schematically illustrating an electrode assembly 1 including the negative electrode 20 when the electrode is a negative electrode, according to some example embodiments.

Referring to FIG. 1, an electrode assembly 1 according to some example embodiments includes a negative electrode 20 including a current collector 21, a negative electrode active material layer 22 on the current collector 21, and a coating layer 23 on the negative electrode active material layer 22; and a positive electrode 10.

In FIG. 1, the negative electrode active material layer 22 and the coating layer 23 are shown as being formed as separate layers, but this description is only provided to indicate the negative electrode active material layer and the coating layer, and the dotted line indicates that the negative electrode active material layer 22 and the coating layer 23 are integrated.

Because the electrode assembly 1 according to some example embodiments has the negative electrode active material layer 22 and the coating layer 23 integrated, the sizes of the negative electrode active material layer 22 and the coating layer 23 in the width direction may be substantially the same.

For example, because the coating layer 23 is integrated with the negative electrode active material layer 22, at least a portion of the nanofibers and the curable polymer may penetrate into an interior of the negative electrode active material layer 22.

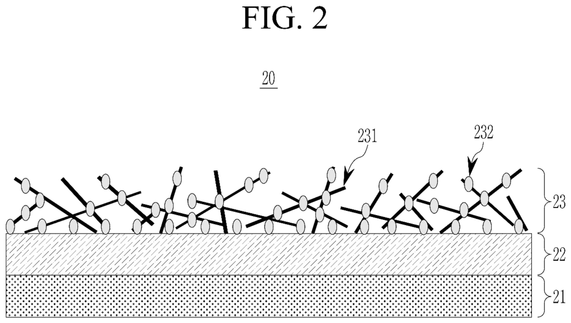

FIG. 2 is a cross-sectional view schematically illustrating a negative electrode 20 according to some example embodiments.

Referring to FIG. 2, the negative electrode 20 includes a current collector 21, a negative electrode active material layer 22 on the current collector 21, and a coating layer 23 on the negative electrode active material layer 22, and the coating layer includes nanofibers 231 and a curable polymer 232 distributed in an island shape between the nanofibers 231.

The curable polymer 232 may constitute a binder that bonds the nanofibers 231 together within the coating layer 23, or that bonds the nanofibers 231 and the negative electrode active material layer 22.

For example, when it is said that the curable polymer 232 is distributed in an island shape between the nanofibers 231, it may mean that the curable polymer 232 exists in a particle or dot form between the nanofibers 231. In another example, it can be understood as a case where a plurality of curable polymers in the form of particles or dots gather together to form the shape of an island.

Referring to FIG. 2, the curable polymer 232 within the coating layer 23 may be in the form of protrusions on the surface of the nanofibers 231, or may be at the joining site of the nanofibers 231. Additionally, the curable polymer 232 may be disposed in a space between a plurality of nanofibers 231, and may be disposed at a portion where the negative electrode active material layer 22 and the nanofibers 231 are joined.

For example, the curable polymer 232 is in the form of protrusions on the surface of the nanofibers 231, which may improve the mechanical strength of the nanofiber itself, and improve the air permeability of the coating layer.

For example, the curable polymer 232 is present at the bonding site of the nanofibers 231, thereby improving the mechanical strength of the nanofibers themselves and the joining force between the nanofibers, thereby also improving the strength of the coating layer.

For example, the curable polymer 232 is disposed at a portion of the negative electrode 20 where the negative electrode active material layer 22 and the nanofibers 231 are joined, thereby improving the adhesive strength between the coating layer 23 and the negative electrode active material layer 22, or the coating layer 23 and the negative electrode 20, and thereby reducing or preventing the delamination of the coating layer and reducing or preventing gas generation during battery operation.

For example, through a scanning electron microscope (SEM) image of the surface of the coating layer observed using a scanning electron microscope (SEM), the shape of the nanofibers and the curable polymer within the coating layer may be confirmed.

In the SEM image of the coating layer, the curable polymer is in the form of protrusions on the surface of the nanofibers and at the joining sites between the nanofibers, and thus can be distinguished within the image.

For example, the nanofibers may be formed by electrospinning a heat-resistant polymer, and the nanofibers may include the heat-resistant polymer. The heat-resistant polymer may be used without limitation as long as the heat-resistant polymer may be electrospun.

For example, the heat-resistant polymer may include a polymer that is or includes at least one of a polyimide (PI), a polyethylene (PE), a polypropylene (PP), a polyester, a polyamide, a polyamic acid, a polyamideimide (PAI), a polyetherimide, a polyacrylonitrile (PAN), a polyvinylidene fluoride (PVDF), a polyvinylidene fluoride-hexafluoropropene (PVDF-HFP), a polycarbonate (PC), a polyvinyl chloride (PVC), a polyvinylidene chloride, a polyethylene glycol derivative, a polyoxide, a polyvinylacetate, a polystyrene (PS), a polyvinylpyrrolidone (PVP), a copolymer thereof, or a combination thereof.

For example, an average diameter (nm) of the nanofibers may be in a range of about 10 nm to about 200 nm, for example about 10 nm to about 150 nm, about 50 nm to about 150 nm, or about 50 nm to about 100 nm. For example, because the coating layer according to some example embodiments is manufactured in an electrospinning manner, the average diameter value of the nanofibers may be in a range similar to the average diameter value of the pores included in the aforementioned nanofibers.

If (when) the above range of the average diameter (nm) of the nanofibers is satisfied, the coating layer may exhibit desired or improved air permeability, adhesive strength, and mechanical strength.

The diameter of the nanofiber may refer to the widest diameter among the fiber diameters measured based on the cross-section of each nanofiber, and may be measured in a direction perpendicular to the longitudinal direction of the nanofiber.

The average diameter of the nanofibers may be calculated by randomly measuring the cross-sectional diameters of about 20 fibers in a scanning electron microscope image of the surface of the coating layer, and then calculating the arithmetic mean thereof.

For example, the curable polymer may be used without limitation as long as the curable polymer is a material that may be sprayed into an island shape through an electrospray process, and an electrically conductive material may not be used.

For example, the curable polymer may include a thermosetting polymer, a photocurable polymer, or a combination thereof.

The thermosetting polymer may include at least one of an epoxy polymer, a phenol polymer, an amino polymer, a polyester polymer, a polyurethane polymer, or a combination thereof. As an example, the thermosetting polymer may include an epoxy polymer having desired or improved adhesive strength, heat resistance, chemical resistance, and mechanical strength.

For example, the epoxy polymer may include at least one of a bisphenol A type epoxy polymer, a bisphenol F type epoxy polymer, a novolac epoxy polymer, an aliphatic epoxy polymer, a cycloaliphatic epoxy polymer, a glycidyl amine epoxy polymer, an epoxy-modified polymer, or a combination thereof.

The phenol polymer may include at least one of a novolac phenol polymer, a resol phenol polymer, a modified phenol polymer, or a combination thereof.

The photocurable polymer may include at least one of an acrylate polymer, an epoxy acrylate polymer, a urethane acrylate polymer, a polyester acrylate polymer, a silicone acrylate polymer, a silicone-based photocurable polymer, or a combination thereof.

For example, the average diameter (nm) of the curable polymer may be in a range of about 50 nm to about 500 nm, for example about 50 nm to about 400 nm, about 100 nm to about 400 nm, or about 100 nm to about 300 nm. When the average diameter of the curable polymer satisfies the above-mentioned range, the coating layer may exhibit desired or improved mechanical strength, air permeability, and adhesive strength.

The diameter of the curable polymer may mean the widest diameter among the diameters of the polymer measured based on the individual island-shaped polymer.

The average diameter of the curable polymer may be calculated by measuring the size (diameter or length of the longest axis) of about 20 randomly selected particles (or islands) of the curable polymer in a scanning electron microscope image of the surface of the coating layer, and calculating the arithmetic mean thereof.

For example, based on 100 parts by weight of the nanofibers, the curable polymer may be included in an amount in a range of about 1 part by weight to about 50 parts by weight, for example, about 1 part by weight to about 40 parts by weight, about 5 parts by weight to about 40 parts by weight, about 5 parts by weight to about 30 parts by weight, or about 5 parts by weight to about 20 parts by weight.

If (when) the curable polymer is included in an amount that is less than about 1 part by weight based on 100 parts by weight of the nanofibers, the physical properties of the coating layer, such as a strength, an adhesive strength, and air permeability, may deteriorate, and if (when) the curable polymer is included in an amount that is more than about 50 parts by weight, the electrospinning properties of the nanofibers may deteriorate and the heat resistance of the coating layer may decrease.

For example, a ratio of a weight of the nanofibers to a weight of the curable polymer included in the coating layer may be in a range of about 1:0.01 to about 1:0.5, for example, about 1:0.01 to about 1:0.4, about 1:0.05 to about 1:0.4, about 1:0.05 to about 1:0.3, or about 1:0.05 to about 1:0.2. When the weight ratio is satisfied, an electrode having desired or improved strength, adhesive strength, and air permeability and a rechargeable lithium battery having desired or improved stability can be realized.

For example, a thickness of the coating layer may be in a range of about 1 µm to about 25 µm, for example, greater than or equal to about 5 µm, or greater than or equal to about 10 µm, and less than or equal to about 20 µm, or less than or equal to about 15 µm.

If (when) the thickness of the coating layer is within the above range, an appropriately high density may be exhibited, and thus the formation of Li dendrites during charge and discharge may be more effectively reduced or suppressed.

For example, a peel strength of the coating layer may be greater than about 0.21 gf/mm, for example, in a range of about 0.25 gf/mm to about 3 gf/mm, about 0.25 gf/mm to about 2 gf/mm, about 0.25 gf/mm to about 1 gf/mm, about 0.25 gf/mm to about 0.7 gf/mm, about 0.28 gf/mm to about 0.7 gf/mm, or about 0.28 gf/mm to about 0.62 gf/mm. The peel strength of the coating layer indicates the adhesive strength between the electrode active material layer and the coating layer, and as indicated by the above value, the coating layer may be substantially strongly adhered to the electrode active material layer.

For example, the peel strength of the coating layer may be measured by attaching a 1.5 cm wide adhesive tape (3M Celotape, registered trademark) to a negative electrode fixed on a stainless-steel plate and using a peel tester (manufacturer: KIPAE E).

For example, the peel strength may be measured using a 180° peel strength test under the conditions of a 1 kg load cell and a peel speed of 100 mm/min.

For example, the air permeability (sec/100cc) of the coating layer may be in a range of about 60 sec/100cc to about 400 sec/100cc, for example about 60 sec/100cc to about 300 sec/100cc, about 60 sec/100cc to about 200 sec/100cc, about 70 sec/100cc to about 200 sec/100cc, or about 70 sec/100cc to about 180 sec/100cc. If (when) the air permeability of the coating layer satisfies the above numerical range, the safety of the battery may be improved by reducing or preventing gas generation during battery operation.

For example, the air permeability of the coating layer may be obtained by measuring the time (in seconds) it takes for 100 cc of air to penetrate using an air permeability measuring device (e.g., Asahi Seiko, EG01-55-1MR).

An electrode according to some example embodiments may further include an inorganic layer (not shown) on the coating layer. The inorganic layer may be in the form of a dense layer, and may be formed, for example, by an electrospraying method. However, the method for forming the inorganic layer is not limited to the electrospraying method, and as long as the inorganic layer may be formed into a dense layer, the method may be carried out using a general coating process such as a doctor blade. If (when) the inorganic layer is in the form of a dense layer, the formation of Li dendrites may be reduced or suppressed more effectively, and if (when) the inorganic layer is a porous layer, a short circuit may occur during charge and discharge, which is not suitable.

The inorganic layer may include an inorganic material including at least one of alumina (Al₂O₃), boehmite (aluminum oxide hydroxide), zirconia, titanium oxide (TiO₂), and silica (SiO₂), or a combination thereof. When an inorganic layer is further included on the coating layer, some of the inorganic material may be inserted into the coating layer.

In addition to the aforementioned coating layer, if (when) an inorganic layer is further included, a heat-resistant synergistic effect may be imparted, particularly by including a heat-resistant polymer, thereby reducing or suppressing the challenge of damage to the negative electrode during the battery manufacturing process. In addition, the heat-resistant synergistic effect is effective in reducing or suppressing the occurrence of lithium dendrites during charging and discharging, and the effects of increasing heat resistance and puncture strength may be further obtained by including inorganic materials. This effect is difficult to obtain and therefore not appropriate when a heat-resistant polymer and an inorganic material are mixed to form a single layer.

### Negative Electrode

The negative electrode for a rechargeable lithium battery includes a current collector, and a negative electrode active material layer on the current collector. The negative electrode active material layer includes a negative electrode active material, and may further include a binder and/or a conductive material.

For example, the negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon, or a combination thereof. The crystalline carbon may be graphite such as non-shaped, sheet-shaped, flake-shaped, sphere-shaped, or fiber-shaped natural graphite or artificial graphite, and the amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder attaches the negative electrode active material particles to each other, and attaches the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material capable of being fibrous, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Method of Manufacturing Electrode Assembly

A method for manufacturing an electrode according to some example embodiments includes preparing a fiber spinning solution, preparing a spray solution including a curable polymer, electrospinning the fiber spinning solution into nanofibers on a surface of an electrode active material layer, and simultaneously or contemporaneously electrospraying the spray solution to form a coating mixture, and curing the electrosprayed curable polymer to form a coating layer on the surface of the electrode active material layer.

According to a method for manufacturing an electrode according to some example embodiments, by electrospinning a fiber spinning solution and simultaneously or contemporaneously electrospraying a spray solution, a coating layer including nanofibers as described above and a curable polymer distributed in an island shape between the nanofibers may be formed.

First, the fiber spinning solution is prepared. The fiber spinning solution may include a polymer and a solvent.

For example, the polymer may be or include a heat-resistant polymer, and the heat-resistant polymer is the same as described above.

For example, the solvent may include at least one of dimethylacetamide, dimethyl acetate, dimethylformamide, dimethyl sulfoxide, acetone, or a combination thereof.

For example, an amount of the polymer may be in a range of about 5 wt% to about 30 wt%, for example about 10 wt% to about 30 wt%, or about 10 wt% to about 20 wt%, based on 100 wt% of the fiber spinning solution. If (when) the above range of the amount of the polymer is satisfied, electrospinning properties of the radiated nanofibers may be improved, and the mechanical strength of the manufactured coating layer may be improved.

Next, the spray solution is prepared. The spray solution may include a curable polymer, a solvent, and a binder. The curable polymer may be the same as described above.

For example, the solvent may include at least one of dimethyl acetate, N-methylpyrrolidone, dimethylformamide, acetone, or a combination thereof.

For example, the binder may include at least one of polyvinylidene fluoride, polyamideimide, polyvinylpyrrolidone, polyacrylonitrile, a copolymer thereof, or a combination thereof. The binder may include at least one of polyvinylidene fluoride, polyamideimide, polyvinylpyrrolidone, polyacrylonitrile, a copolymer thereof, or a combination thereof.

For example, an amount of the curable polymer may be in a range of about 5 wt% to about 30 wt%, for example about 10 wt% to about 30 wt%, or about 10 wt% to about 20 wt% based on 100 wt% of the spray solution. When the above range of the amount of the curable polymer is satisfied, the manufactured coating layer has the advantage of desired or improved heat resistance.

Next, the fiber spinning solution is electrospun into the form of nanofibers on the surface of the electrode active material layer, and the spray solution is electrosprayed.

The electrospinning process may be performed by disposing one nozzle pack consisting of a tip having a hole size in a range of about 23G (gauge) to about 30G and a collector roller at a predetermined or desired interval, adding the fiber spinning solution to the tip, disposing the target material on the contact roller, and then applying a voltage in a range of about 35 kV to about 100 kV to the tip.

The number of the tips may be appropriately adjusted depending on the type and amount of the polymer included in the fiber spinning solution, and may be, for example, in a range of about 1 to about 1,000.

The predetermined or desired distance between the nozzle pack and the target substrate may be in a range of about 10 cm to about 20 cm.

If (when) the hole size of the tip is in a range of about 25G to about 30G the hole size of the tip may be suitable because a coating layer of a desired shape may be formed.

According to the electrospinning process, a polymer solution is spun into a fiber shape and stretched, and then spun onto a target substrate in the form of nanofibers, thereby forming a coating layer. To explain the above in more detail, the fiber spinning solution is suspended in the form of a droplet at the tip due to surface tension, and when voltage is applied, charges are accumulated on the surface of the fiber spinning solution droplet, and a repulsive force occurs between the charges. Accordingly, the repulsive force among the charges is directed in an opposite direction to surface tension of the solution, and when the voltage reaches a threshold point, a Taylor cone is formed, and from the tip end of the Taylor cone, the polymer solution is jetted, and goes through multi-axial stretching in a whipping region, and nanofibers are collected into a non-woven fabric by the collector roller to form an organic layer a coating layer.

For example, the electrospinning process may be performed at a temperature in a range of about 20 °C to about 30 °C and a relative humidity in a range of about 0% to about 60%. If (when) the electrospinning process is performed under the above temperature and relative humidity conditions, there may be an advantage of keeping the fibers to have a predetermined or desired thickness, while spinning.

In addition, a rolling speed of the collector roller may be adjusted to secure an appropriate thickness of the coating layer, for example, in a range of about 0.1 m/min to about 3 m/min. Furthermore, the fiber spinning solution may be adjusted to be discharged from the tips at a flow rate in a range of about 1 ml/min to about 100 ml/min.

In addition, interference among the tips may be reduced or minimized to secure substantially uniform electrospinning by appropriately controlling tip air. The tip air may be controlled by flowing compressed air at a pressure in a range of about 0.01 MPa to about 0.5 MPa.

For example, the electrospinning process may be performed about twice or more.

As nanofibers are formed by electrospinning, the formed nanofibers may have a three-dimensional network structure. As the coating layer is formed by an electrospinning process, the solvent may be readily volatilized, which is suitable because the spring back phenomenon in which the solvent damages the electrode may be better reduced or suppressed.

Simultaneously or contemporaneously with the electrospinning process, the spray solution is electrosprayed to form a coating mixture.

For example, the applied voltage during electrospraying may be in a range of about 15 kV to about 80 kV, for example, about 15 kV to about 60 kV, about 15 kV to about 40 kV, about 15 kV to about 30 kV, or about 20 kV to about 30 kV. For example, the spray distance during electrospraying may be in a range of about 10 cm to about 30 cm, for example about 10 cm to about 25 cm, or about 10 cm to about 20 cm. For example, the spraying speed during electrospraying may be in a range of about 0.5 ml/min to about 1.5 ml/min, for example about 1.0 ml/min to about 1.5 ml/min, or about 0.5 ml/min to about 1.0 ml/min.

For example, the electrospraying process may be performed two or more times.

Some example embodiments include curing the electrosprayed curable polymer after the electrospinning process and the electrospraying process, to form a coating layer on the surface of the electrode active material layer.

The curing may be performed by a thermal curing process or a photocuring process depending on the type of the curable polymer.

For example, when the curable polymer is a thermosetting polymer (e.g., an epoxy polymer), the thermosetting process may be performed by hot air drying or heat treatment at a temperature in a range of about 70 °C to about 120 °C. For example, the heat curing process may be performed at a temperature in a range of about 70 °C to about 110 °C, about 80 °C to about 120 °C, about 80 °C to about 110 °C, about 80 °C to about 100 °C, or about 90 °C to about 100 °C.

For example, when the curable polymer is the photocurable polymer described above, the photocuring process may be performed by irradiating with ultraviolet light or visible light, and the like. In this case, a photoinitiator may be further included in the spray solution.

Through the above steps, the curable polymer is cured, thereby realizing an electrode having desired or improved strength and adhesive strength.

After forming the coating layer, further roll pressing may be performed. The roll press process may be performed at a temperature in a range of about 25 °C to about 110 °C. If (when) the roll press process is further performed, the coating layer is compressed, which may have the advantage of shortening the Li ion movement path and improving the movement of lithium ions during charging and discharging. In addition, by additionally performing the roll press process, the coating layer and the electrode active material layer may be more effectively integrated.

When the electrode formed through the method for manufacturing an electrode according to some example embodiments is a negative electrode, an electrode assembly may be manufactured by disposing the formed negative electrode and positive electrode so as to be in contact with each other. Herein, the positive electrode is disposed so as to be in contact with the negative electrode, with the coating layer interposed therebetween.

### Positive Electrode

The positive electrode for a rechargeable lithium battery may include a current collector, and a positive electrode active material layer formed on the current collector. The positive electrode active material layer includes a positive electrode active material and may further include a binder and/or a conductive material.

For example, the positive electrode may further include an additive that can constitute a sacrificial positive electrode.

The positive electrode active material may be or include a compound (lithiated intercalation compound) capable of intercalating and deintercalating lithium. For example, at least one compound oxide of lithium and a metal such as or including at least one of cobalt, manganese, nickel, and combinations thereof may be used.

The composite oxide may be or include a lithium transition metal composite oxide, and examples thereof include at least one of a lithium nickel-based oxide, a lithium cobalt-based oxide, a lithium manganese-based oxide, a lithium iron phosphate-based compound, a cobalt-free lithium nickel-manganese oxide, or a combination thereof.

As an example, a compound represented by any one of the following chemical formulas may be used. LiₐA_{1b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may be or include a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel positive electrode active material may achieve high capacity, and may be applied to high-capacity, high-density rechargeable lithium batteries.

An amount of the positive electrode active material may be in a range of about 90 wt% to about 99.5 wt% based on 100 wt% of the positive electrode active material layer, and amounts of the binder and conductive material may be in a range of about 0.5 wt% to about 5 wt%, respectively, based on 100 wt% of the positive electrode active material layer.

The binder adheres positive electrode active material particles to each other, and adheres positive electrode active material to a current collector

Examples of the bindermay include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity to the electrode, and any material that does not cause adverse chemical change and that conducts electrons can be used in the battery. Examples of the conductive material may include a carbon-based material such as natural graphite, artificial graphite, carbon black, acetylene black, Ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

The current collector may be or include Al, but the current collector is not limited thereto.

### Rechargeable Lithium Battery

Some example embodiments include a rechargeable lithium battery including the electrode and electrolyte. The rechargeable lithium battery has the advantage of desired or improved battery safety by including the aforementioned electrode.

The electrolyte may include an electrolyte solution, a solid electrolyte, or a combination thereof, and as an example, an electrolyte solution for a rechargeable lithium battery may include a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. For example, the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), x and y are integers in a range of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

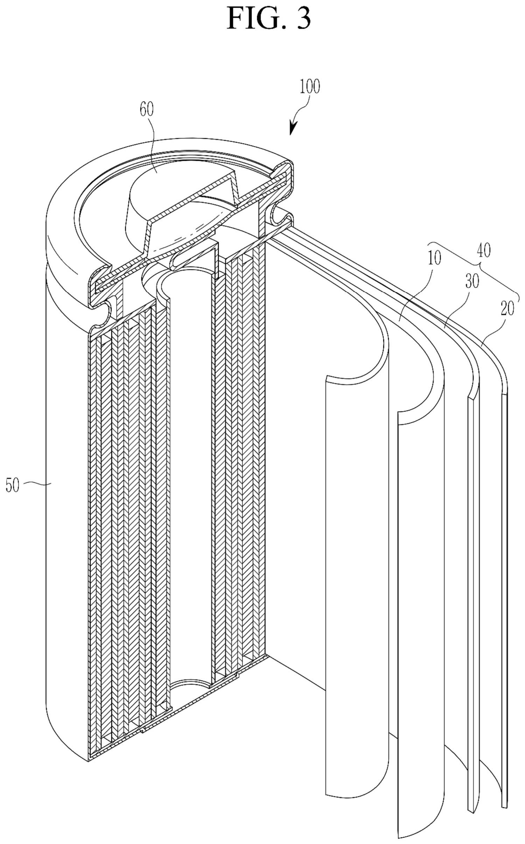

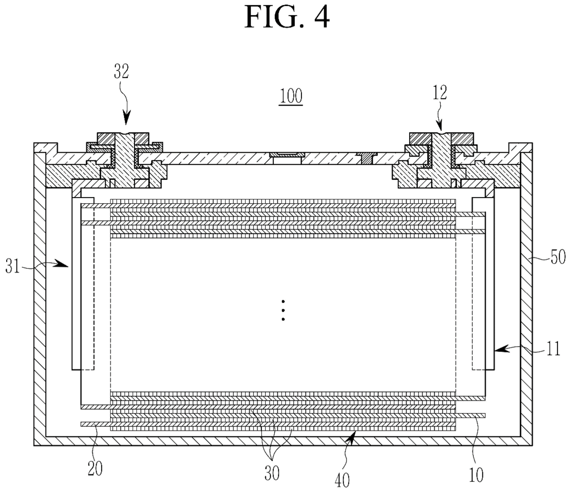

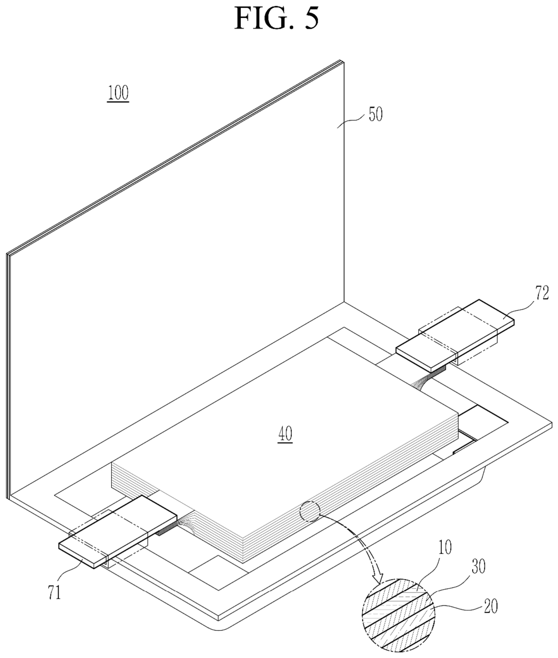

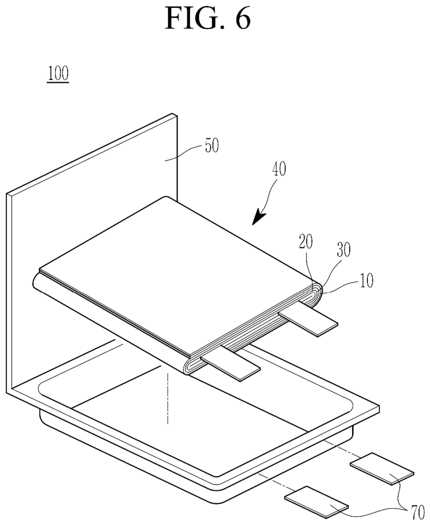

The rechargeable lithium battery may be classified into cylindrical, prismatic, pouch, coin, and the like depending on the shape thereof. FIG. 3 to FIG. 6 are schematic views illustrating rechargeable lithium batteries according to some example embodiments. FIG. 3 shows a cylindrical battery, FIG. 4 shows a prismatic battery, and FIGS. 5 and 6 show pouch-type batteries. Referring to FIG. 3 to FIG. 6, the rechargeable lithium battery 100 includes an electrode stacked structure 40 including a separator 30 between a positive electrode 10 and a negative electrode 20, and a case 50 in which the electrode stacked structure 40 is included. The positive electrode 10, the negative electrode 20, and the separator 30 may be impregnated with an electrolyte solution (not shown). The rechargeable lithium battery 100 may include a sealing member 60 that seals the case 50 as shown in FIG. 3. In FIG. 4, the rechargeable lithium battery 100 may include a positive electrode lead tab 11, a positive electrode terminal 12 connected to the positive electrode lead tab 11, a negative electrode lead tab 31, and a negative electrode terminal 32 connected to the negative electrode lead tab 31. As shown in FIGS. 5 and 6, the rechargeable lithium battery 100 includes an electrode tab 70 illustrated in FIG. 6, or a positive electrode tab 71 and a negative electrode tab 72 illustrated in FIG. 5, the electrode tabs 70/71/72 forming an electric path for inducing the current formed in the electrode stacked structure 40 to the outside of the battery 100.

The rechargeable lithium battery according to some example embodiments may be applicable to, e.g., automobiles, mobile phones, and/or various types of electrical devices, but the present disclosure is not limited thereto.

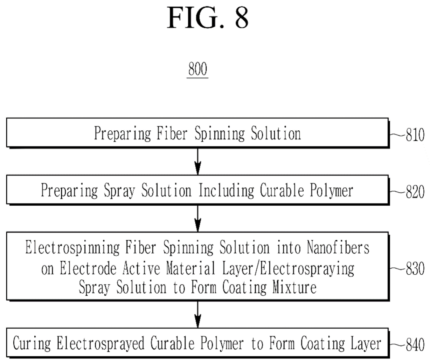

FIG. 8 is a flowchart illustrating a method of manufacturing an electrode for a rechargeable lithium battery, according to an example embodiment. In FIG. 8, the method 800 includes operation 810 which includes preparing a fiber spinning solution. Operation 820 includes preparing a spray solution including a curable polymer. Operation 830 includes electrospinning the fiber spinning solution into nanofibers on a surface of an electrode active material layer and contemporaneously electrospraying the spray solution to form a coating mixture. Operation 840 includes curing the electrosprayed curable polymer to form a coating layer on the surface of the electrode active material layer. In an example, the curing is performed by one of a thermal curing process and a photocuring process. For example, the thermal curing process is performed by one of hot air drying and heat treatment under a temperature in a range of about 70 °C to about 120 °C.

Examples and comparative examples of the present disclosure are described below. However, the following examples are only examples of the present disclosure, and the present disclosure is not limited to the following examples.

Examples:

### Example 1

First, 97.5 wt% of artificial graphite, 1.0 wt% of carboxymethyl cellulose, and 1.5 wt% of styrene butadiene rubber (SBR) were mixed in a water solvent to prepare a negative electrode active material slurry. The negative electrode active material slurry was coated onto a copper current collector, and then dried and rolled to form a negative electrode active material layer.

Subsequently, a fiber spinning solution including polyimide and a dimethyl acetate solvent and a spray solution including a bisphenol A epoxy polymer, a dimethyl acetate solvent, and a polyvinylidene fluoride binder were prepared.

Herein, based on 100 wt% of the fiber spinning solution, 20 wt% of the polyimide was included, and based on 100 wt% of the spray solution, 20 wt% of the bisphenol A epoxy polymer was included.

On the surface of the negative electrode active material layer, the fiber spinning solution was electrospun into the form of nanofibers, and simultaneously or contemporaneously, the spray solution was electrosprayed to form a coating layer solution.

The electrospinning was performed under the following conditions.

After positioning one nozzle pack consisting of 52 tips with a hole size of 25G and a collector roller at an interval of 15 cm, the fiber spinning solution was added to the tips, and then electrospun by applying a voltage of 40 kV to 50 kV at 26 °C under relative humidity of 50%. Herein, the collector roller was rolled at 1 m/min to 3 m/min, and the fiber spinning solution discharged from the tips was adjusted to have a solid content of 150 µl/min. In addition, the electrospinning was performed by flowing compressed air at a pressure of 0.1 MPa.

The electrospraying proceeded at an applied voltage of 20 kV, a spray distance of 10 cm, and a spray speed of 1 ml/min.

The coating layer solution formed by the electrospinning and the electrospraying was dried with hot air at 90 °C to cure the bisphenol A epoxy polymer, and thus a negative electrode having a coating layer on the surface of the negative electrode active material layer was manufactured.

In the coating layer, based on 100 parts by weight of the polyimide nanofibers, 5 parts by weight of the bisphenol A epoxy polymer was included, and the formed coating layer had a thickness of 10 µm.

In addition, when the coating layer was subjected to SEM image analysis on the surface, the nanofibers formed within the coating layer had a three-dimensional network structure including a plurality of pores having an average diameter of 100 nm. In addition, the nanofibers had an average diameter of 100 nm, and the epoxy polymer had an average diameter of 300 nm.

Subsequently, 96 wt% of LiCoO₂, 2 wt% of Ketjen black, and 2 wt% of polyvinylidene fluoride were mixed in an N-methyl pyrrolidone solvent to prepare a positive electrode active material slurry. The positive electrode active material slurry was coated on an AI current collector, and then dried and compressed to manufacture a positive electrode.

The manufactured negative and positive electrodes were stacked to overlap each other to manufacture an electrode assembly. Herein, the organic layer of the negative electrode was disposed to contact the positive electrode. The electrode assembly was used with an electrolyte to manufacture a rechargeable lithium battery cell (a pouch cell of about 40 mAh).

The electrolyte was prepared by dissolving LiPF₆ in a mixed solvent of ethylene carbonate and ethylmethyl carbonate (in a volume ratio of 50:50).

### Examples 2 to 4

A negative electrode and a rechargeable lithium battery cell according to Examples 2 to 4 were manufactured in the same manner as in Example 1, with differences in the amount of the bisphenol A epoxy polymer based on 100 parts by weight of the polyimide nanofibers in the coating layer was changed as shown in Table 1 below.

### Comparative Example 1

A negative electrode and a rechargeable lithium battery cell according to Comparative Example 1 were manufactured in the same manner as in Example 1, with a difference in that the coating layer was formed only by including the electrospinning process of the fiber spinning solution without the electrospraying process of the spray solution.

### Comparative Example 2

A negative electrode and a rechargeable lithium battery cell according to Comparative Example 2 were manufactured in the same manner as in Example 1, with a difference in that the coating layer was not formed, but a polyethylene/polypropylene two-layer separator instead of the coating layer was applied between positive and negative electrodes.

### Evaluation Examples:

### Evaluation Example 1: SEM Image

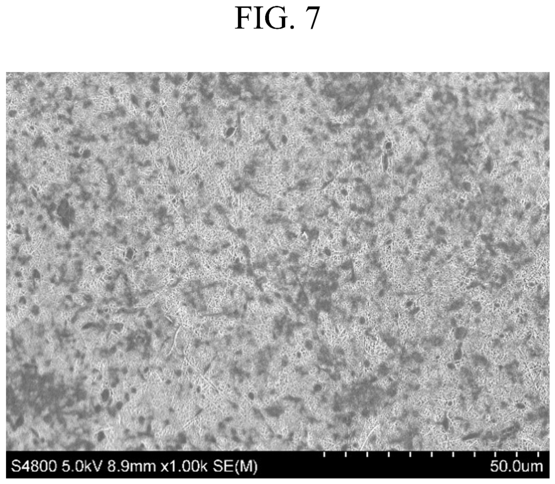

The coating layer manufactured in Example 1 was taken an SEM image of on the surface, which is shown in FIG. 7. In FIG. 7, a relatively darker portion is a curable polymer, and referring to FIG. 7, nanofibers and an island-shaped curable polymer between nanofibers are confirmed.

### Evaluation Example 2: Evaluation of Peel Strength

The negative electrodes of Examples 1 to 4 and Comparative Examples 1 to 2 were measured with respect to peel strength between coating layer and negative electrode active material layer. The negative electrode of Comparative Example 2, in which a separator was applied instead of the coating layer, was measured with respect to peel strength between negative electrode active material layer and separator.

Specifically, after attaching a 1.5 cm-wide adhesive tape (3M Celotape registered trademark) to the negative electrode fixed onto a stainless steel plate, the peel strength was measured by using a peel tester (Model number: KP-M1T-s, Manufacturer: KIPAE E&T Co., Ltd.). Specifically, the peel strength was measured by performing a 180 ° peel strength test and using a 1 kg load cell at a peeling speed of 100 mm/min.

The measurement results are shown in Table 1 below.

### Evaluation Example 3: Evaluation of Air Permeability

The coating layers of Examples 1 to 4 and Comparative Example 1 and the separator of Comparative Example 2 were measured with respect to air permeability by measuring time (sec) required for 100 cc of air to permeate by using an air permeability-measuring device (EG01-55-1MR, Asahi Seiko Co., Ltd.), and the results are shown in Table 1 below.

### Evaluation Example 4: Evaluation of DC-IR

The rechargeable lithium battery cells of Examples 1 to 4 and Comparative Examples 1 to 2 were measured with respect to DC internal resistance (DC-IR) at 25 °C, and the results are shown in Table 1 below.

Specifically, the battery cells, of which discharge capacity was checked, were CC-CV (constant current-constant voltage)-charged at 0.5 C, cut off at 0.025 C, and discharged at 0.1 C. Herein, the DC internal resistance (DC-IR) was measured by measuring a voltage drop (V), while applying a current of 1 C for 10 seconds at SOC 50 (a state of charging a battery to 50% of charge capacity based on 100% of total charge capacity of the battery, which is a state of being discharged to 50% based on the discharge state).

**Table 1:**

| | Example 1 | Example 2 | Example 3 | Example 4 | Comparative Example 1 | Comparative Example 2 |
|---|---|---|---|---|---|---|
| Amount of curable polymer nanofibers based on 100 parts by weight | 5 parts by weight | 10 parts by weight | 20 parts by weight | 40 parts by weight | 0 parts by weight | - |
| Peel strength (gf/mm) | 0.28 | 0.33 | 0.47 | 0.62 | 0.21 | 0.09 |
| Air permeability (sec/100cc) | 71 | 89 | 114 | 174 | 56 | 127 |
| DC-IR (Ω) @ 40mAh cell | 37.3 | 37.7 | 39.1 | 44.6 | 36.9 | 38.2 |

Referring to Table 1, the negative electrodes of Examples 1 to 4 exhibited higher peel strength than Comparative Examples 1 and 2.

In addition, the negative electrode of Comparative Example 1, which included no island-shaped curable polymer, was confirmed to exhibit low air permeability.

In addition, the rechargeable lithium battery cells of Examples 1 to 4 had equivalent initial DC-IR to those of Comparative Examples 1 and 2, which confirmed the nanofibers and the curable polymer did not act as resistors but achieved desired or improved peel strength and air permeability.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

**Description of Symbols:**

| | | | |
|---|---|---|---|
| 1: | electrode assembly | 10: | positive electrode |
| 20: | negative electrode | 21: | current collector |
| 22: | negative electrode active material layer | | |
| 23: | coating layer | | |
| 231: | nanofibers | 232: | curable polymer |
| 100: | rechargeable lithium battery | 11: | positive electrode lead tab |
| 12: | positive electrode terminal | 31: | negative electrode lead tab |
| 32: | negative electrode terminal | 30: | separator |
| 40: | electrode laminate | 50: | case |
| 60: | sealing member | 70: | electrode tab |
| 71: | positive electrode tab | 72: | negative electrode tab |

## Claims

1. An electrode (10, 20) for a rechargeable lithium battery (100), the electrode (10, 20), preferably being a negative electrode (20), comprising:
a current collector (21);
an electrode active material layer (22) on the current collector (21); and
a coating layer (23) on the electrode active material layer (22),
wherein the coating layer (23) comprises nanofibers (231) and a curable polymer (232) distributed in an island shape between the nanofibers (231).

2. The electrode (10, 20) as claimed in claim 1, wherein the nanofibers (231) have a three-dimensional network structure comprising pores, wherein preferably an average diameter of the pores is in a range of 10 nm to 200 nm.

3. The electrode (10, 20) as claimed in claim 1 or 2, wherein the coating layer (23) is integrated with the electrode active material layer (22).

4. The electrode (10, 20) as claimed in any of the preceding claims, wherein at least a portion of the nanofibers (231) and the curable polymer (232) penetrates into an interior of the negative electrode active material layer (22).

5. The electrode (10, 20) as claimed in any of the preceding claims, wherein the nanofibers (231) comprise a polymer that comprises at least one of a polyimide (PI), a polyethylene (PE), a polypropylene (PP), a polyester, a polyamide, a polyamic acid, a polyamideimide (PAI), a polyetherimide, a polyacrylonitrile (PAN), a polyvinylidene fluoride (PVDF), a polyvinylidene fluoride-hexafluoropropene (PVDF-HFP), a polycarbonate (PC), a polyvinyl chloride (PVC), a polyvinylidene chloride, a polyethylene glycol derivative, a polyoxide, a polyvinylacetate, a polystyrene (PS), a polyvinylpyrrolidone (PVP), a copolymer thereof, and a combination thereof.

6. The electrode (10, 20) as claimed in any of the preceding claims, wherein an average diameter of the nanofibers (231) is in a range of 10 nm to 200 nm; and/or wherein an average diameter of the curable polymer (232) is in a range of 100 nm to 300 nm.

7. The electrode (10, 20) as claimed in any of the preceding claims, wherein the curable polymer (232) comprises at least one of a thermosetting polymer, a photocurable polymer, and a combination thereof.

8. The electrode (10, 20) as claimed in claim 7, wherein the thermosetting polymer comprises at least one of an epoxy polymer, a phenol polymer, an amino polymer, a polyester polymer, a polyurethane polymer, and a combination thereof, and wherein preferably the epoxy polymer comprises at least one of a bisphenol A type epoxy polymer, a bisphenol F type epoxy polymer, a novolac epoxy polymer, an aliphatic epoxy polymer, a cycloaliphatic epoxy polymer, a glycidyl amine epoxy polymer, an epoxy-modified polymer, and a combination thereof.

9. The electrode (10, 20) as claimed in any of the preceding claims, wherein the curable polymer (232) is included in an amount in a range of 1 part by weight to 50 parts by weight based on 100 parts by weight of the nanofibers (231); and/or wherein a ratio of a weight of the nanofibers (231) to a weight of the curable polymer (232) included in the coating layer (23) is in a range of 1:0.01 to 1:0.5.

10. The electrode (10, 20) as claimed in any of the preceding claims, wherein a thickness of the coating layer (23) is in a range of 1 µm to 25 µm.

11. The electrode (10, 20) as claimed in any of the preceding claims, wherein the electrode (10, 20) further comprises an inorganic layer on the coating layer (23).

12. A method for manufacturing an electrode (10, 20) for a rechargeable lithium battery (100), and preferably for manufacturing an electrode (10, 20) configured according to any of the preceding claims, the method comprising:
preparing a fiber spinning solution;
preparing a spray solution comprising a curable polymer (232);
electrospinning the fiber spinning solution into nanofibers (231) on a surface of an electrode active material layer (22) and contemporaneously electrospraying the spray solution to form a coating mixture; and
curing the electrosprayed curable polymer (232) to form a coating layer (23) on the surface of the electrode active material layer (22).

13. The method as claimed in claim 12, wherein the curing is performed by one of a thermal curing process and a photocuring process.

14. The method as claimed in claim 13, wherein the thermal curing process is performed by one of hot air drying and heat treatment under a temperature in a range of 70 °C to 120 °C.

15. A rechargeable lithium battery (100), comprising:
the electrode (10, 20) as claimed in any of claims 1 to 11, or the electrode (10, 20) manufactured by a method as claimed in any of claims 12 to 14; and
an electrolyte.
